(19) Europäisches Patentamt
European Patent Office
Office européen des brevets

(11) **EP 3 825 836 A1**

(12) **EUROPEAN PATENT APPLICATION**

(43) Date of publication:
26.05.2021 Bulletin 2021/21

(51) Int Cl.:
*G06F 3/12* (2006.01)    *B41J 3/36* (2006.01)

(21) Application number: 20206686.6

(22) Date of filing: 10.11.2020

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: 25.11.2019  JP 2019212754

(71) Applicant: **Ricoh Company, Ltd.**
**Tokyo 143-8555 (JP)**

(72) Inventors:
• **SHIKAMA, Takeshi**
**Tokyo, 143-8555 (JP)**
• **TOKUMARU, Ko**
**Tokyo, 143-8555 (JP)**
• **TANAKA, Hiroki**
**Tokyo, 143-8555 (JP)**
• **KOBAYASHI, Nobuyuki**
**Tokyo, 143-8555 (JP)**
• **YOSHIKAWA, Naoki**
**Tokyo, 143-8555 (JP)**

(74) Representative: **SSM Sandmair**
**Patentanwälte Rechtsanwalt**
**Partnerschaft mbB**
**Joseph-Wild-Straße 20**
**81829 München (DE)**

(54) **INFORMATION PROCESSING DEVICE, INFORMATION PROCESSING SYSTEM, AND INFORMATION PROCESSING METHOD**

(57)    An information processing device (401) includes a communication circuit (420) configured to communicate with a printer (2), a print data generation unit (26) configured to generate print data, and a transmission control unit (24) configured to control the communication circuit (420) to transmit the print data to the printer (2). The print data includes image data of a print target and operation direction information indicating an operation direction of the printer on a print medium for each print target. The printer (2) is configured to print the print target based on the image data on the print medium while being operated in a direction indicated by the operation direction on the print medium.

FIG. 1

EP 3 825 836 A1

**Description**

Technical Field

Embodiments of the present disclosure relate to an information processing device, an information processing system, and information processing method.

Description of the Related Art

In recent years, as laptop personal computers become compact and smart devices have spread, compactness and portability of printers are desired. For example, JP-2010-520087-A discloses a handheld printer from which a paper conveyance mechanism is omitted for enhancing compactness and portability.

This handheld printer receives data of image to be printed from, for example, a smart device or a personal computer. A user holds a housing of the handheld printer with hand and operates the printer on a print medium such as a notebook or paper. As a result, ink is discharged according to the amount of operation, and the image is printed according to the received image data on the print medium.

However, in the case of the handheld printer disclosed in JP-2010-520087-A, it is difficult for the user to know in advance print contents (letters, symbols, images, etc. to be printed), the position where printing is performed, and the operation direction of the handheld printer. For this reason, there may be a deviation of print position, an operation in a different direction, and printing of unintended letters, images, and the like, which is inconvenient. Thus, the print precision and the usability are poor.

SUMMARY

In view of the foregoing, an object of the disclosure is to provide an information processing device and an information processing system to improve print precision and usability of a hand-operated printer.

In order to achieve the above-described object, there is provided an information processing device as described in appended claims. Advantageous embodiments are defined by the dependent claims.

Advantageously, the information processing device is configured to communicate with a printer. The information processing device includes a communication circuit configured to communicate a the printer, a print data generation unit configured to generate print data, and a transmission control unit configured to control the communication circuit to transmit the print data to the printer. The print data includes image data of a print target and operation direction information indicating an operation direction of the printer on a print medium for each print target. The printer is configured to print the print target based on the image data on the print medium while being operated in a direction indicated by the operation direction on the print medium.

Further, there is provided an information processing method.

Advantageously, the information processing method includes communicating with a printer, generating print data including image data of a print target and operation direction information indicating an operation direction of the printer on a print medium for each print target, and transmitting the print data to the printer. The printer is configured to print the print target based on the image data on the print medium while being operated in a direction indicated by the operation direction on the print medium.

Accordingly, the print precision and the usability of a hand-operated printer can improve.

BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:

FIG. 1 is a diagram illustrating a configuration of a printing system according to an embodiment of the present disclosure;

FIG. 2 is a block diagram illustrating a configuration of a mobile communication terminal of the printing system illustrated in FIG. 1;

FIG. 3 is a block diagram illustrating a functional configuration of the mobile communication terminal illustrated in FIG. 2;

FIG. 4 is a perspective view of a handheld printer of the printing system illustrated in FIG. 1;

FIG. 5 is a block diagram illustrating a configuration of the handheld printer illustrated in FIG. 4;

FIG. 6 is a block diagram illustrating a functional configuration of a controller of the handheld printer illustrated in FIG. 5;

FIG. 7 is a sequence chart illustrating print navigation on the mobile communication terminal illustrated in FIG. 2;

FIG. 8 is a diagram illustrating an example of an input screen displayed on the mobile communication terminal illustrated in FIG. 2, during the print navigation illustrated in FIG. 7;

FIG. 9 is a diagram illustrating an example of a format of print data supplied from the mobile communication terminal illustrated in FIG. 2 to the handheld printer illustrated in FIG. 5;

FIGS. 10A, 10B, and 10C are diagrams illustrating an example of a navigation screen presenting a print content, a print position, and a print direction displayed on the mobile communication terminal illustrated in FIG. 2;

FIGS. 11A, 11B, and 11C are diagrams illustrating another example of the navigation screen displayed on the mobile communication terminal illustrated in FIG. 2;

FIG. 12 is a flowchart illustrating a printing operation of the handheld printer illustrated in FIG. 5; and

FIG. 13 is a diagram illustrating a position calculation method of a navigation sensor of the handheld printer illustrated in FIG. 5.

The accompanying drawings are intended to depict embodiments of the present invention and should not be interpreted to limit the scope thereof. The accompanying drawings are not to be considered as drawn to scale unless explicitly noted.

DETAILED DESCRIPTION

In describing embodiments illustrated in the drawings, specific terminology is employed for the sake of clarity. However, the disclosure of this patent specification is not intended to be limited to the specific terminology so selected, and it is to be understood that each specific element includes all technical equivalents that operate in a similar manner and achieve a similar result.

Referring now to the drawings, wherein like reference numerals designate identical or corresponding parts throughout the several views thereof, embodiments according to the present disclosure are described. As used herein, the singular forms "a," "an," and "the" are intended to include the plural forms as well, unless the context clearly indicates otherwise.

Hereinafter, a printing system according to an embodiment of the present disclosure is described with reference to the accompanying drawings.

System Configuration

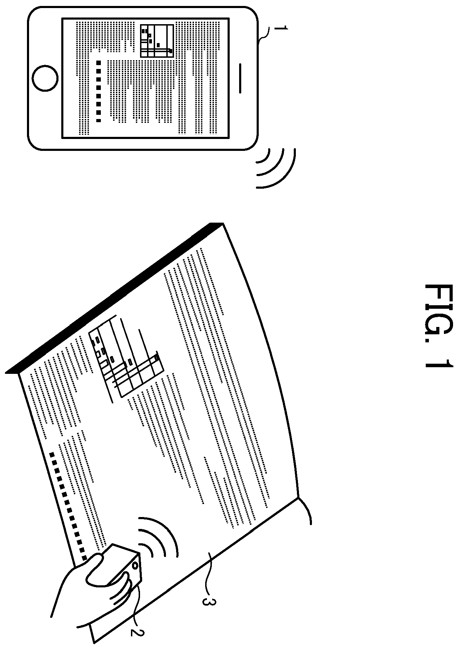

FIG. 1 is a diagram illustrating a configuration of a printing system according to the present embodiment. As illustrated in FIG. 1, the printing system according to the present embodiment includes a mobile communication terminal 1 and a handheld printer 2 (an example of a printer). The mobile communication terminal 1 is, for example, an electronic device, such as a smartphone, a tablet terminal, or a laptop or desktop personal computer, with wireless communication (or wired communication) capability. The mobile communication terminal 1 transmits the data of the image to be printed to the handheld printer 2.

The handheld printer 2 is a lightweight and compact printer. As illustrated in FIG. 1, a user holds and operates (i.e., moves), with one hand, the handheld printer 2 on a print medium 3. According to the amount of operation by the user, the handheld printer 2 forms (prints) an image on the print medium 3 based on the image data received from the mobile communication terminal 1.

Hardware Configuration of Mobile Communication Terminal

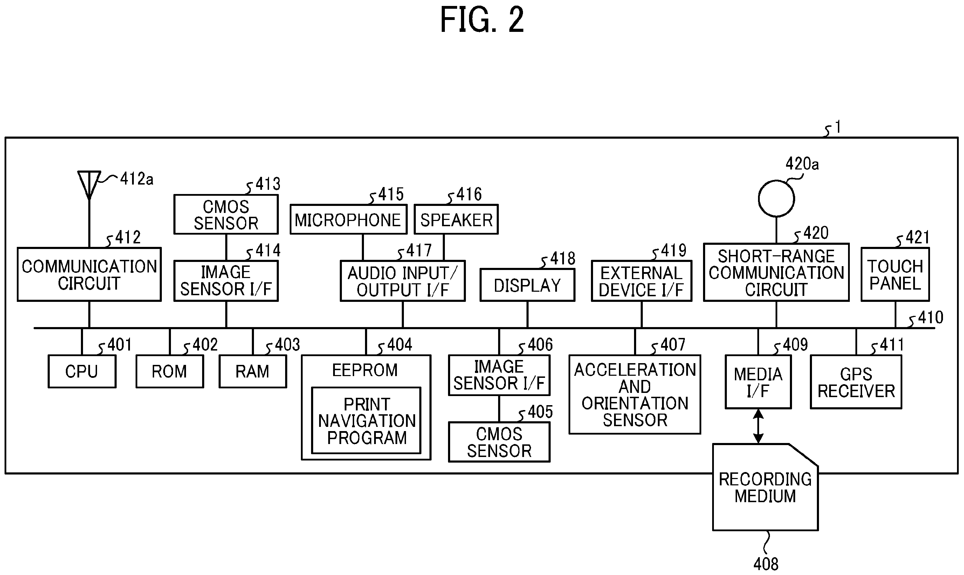

FIG. 2 is a block diagram illustrating a hardware configuration of the mobile communication terminal 1. As illustrated in FIG. 2, the mobile communication terminal 1 includes a central processing unit (CPU) 401, a read only memory (ROM) 402, a random access memory (RAM) 403, an electrically erasable programmable read-only memory (EEPROM) 404, a complementary metal oxide semiconductor (CMOS) sensor 405, an image sensor interface (I/F) 406, an acceleration and orientation sensor 407, a media I/F 409, and a global positioning system (GPS) receiver 411.

The CPU 401 controls the entire operation of the mobile communication terminal 1. The ROM 402 stores programs used by the CPU 401 or used by an initial program loader (IPL) to boot the CPU 401. The RAM 403 is used as a work area for the CPU 401. The EEPROM 404 performs reading or writing of various data such as a mobile communication terminal program under control of the CPU 401.

Further, the EEPROM 404 stores a print navigation program for navigating the operation of the handheld printer 2. As will be described later, as the CPU 401 executes the print navigation program to control each part of the mobile communication terminal 1, the CPU 401 instructs the user of print contents (a letter, a symbol, and an image to be printed), the position of printing, and the direction in which the handheld printer 2 is to be operated. The user operates the handheld printer 2 in the instructed direction, at the instructed print position. As a result, the user can print a letter or an image recognized in advance, at the positions recognized in advance.

The CMOS sensor 405 generates image data corresponding to image capture light from a subject under the control of the CPU 401. In addition or alternative to the CMOS sensor, a different image capture device such as a charge-coupled device (CCD) image sensor may be used.

The image sensor I/F 406 is an interface for connecting the CMOS sensor 405 to a bus line 410. Examples of the acceleration and orientation sensor 407 include various sensors such as an electromagnetic compass to detect geomagnetism, a gyrocompass, and an accelerometer. The media I/F 409 is an interface for connecting a recording medium 408 such as a flash memory to the bus line 410. To and from the recording medium 408, for example, data of an image to be printed is written and read out via the media I/F 409. The image data can be stored in another storage area such as the ROM 402 or the RAM 403. The GPS receiver 411 receives a GPS signal from a GPS satellite.

The mobile communication terminal 1 further includes a communication circuit 412, a CMOS sensor 413, an image sensor I/F 414, a microphone 415, a speaker 416, an audio input/output I/F 417, a display 418, an external device I/F 419, a short-range communication circuit 420, an antenna 420a for the short-range communication circuit 420, and a touch panel 421.

As will be described later, the display 418 displays an input screen for inputting a desired print mode based on the print navigation program. Based on the print navigation program, the CPU 401 lets the user to recognize, via the input screen, the print position and the operation direction of the handheld printer 2 to attain the form of print input by the user. As a result, the user can print desired letters, images, and the like at a desired position, which is displayed on the input screen, without a deviation.

The communication circuit 412 communicates with other devices via a communication network 412a. The CMOS sensor 413 captures an image of a subject and generates image data under the control of the CPU 401. The image sensor I/F 414 is an interface for connecting the CMOS sensor 413 to the bus line 410. The microphone 415 generates an audio signal which is an electric signal corresponding to collected voice. The speaker 416 outputs sound such as music or voice corresponding to the audio signal. The audio input/output I/F 417 is a circuit for inputting and outputting an audio signal between the microphone 415 and the speaker 416 under control of the CPU 401.

The display 418, such as a liquid crystal display or an organic electro luminescence (EL) display, displays an image of a subject or various icons. The external device I/F 419 is an interface for connection with various external devices. The short-range communication circuit 420 is a communication circuit in compliance with the near field communication (NFC), the Bluetooth (registered trademark), and the like. The touch panel 421 is disposed on the display 418 and detects a touch (contact operation) of the user.

The mobile communication terminal 1 further includes the bus line 410. The bus line 410 is, e.g., an address bus or a data bus configured to electrically connect the components such as the CPU 401 illustrated in FIG. 2.

Software Configuration of Mobile Communication Terminal

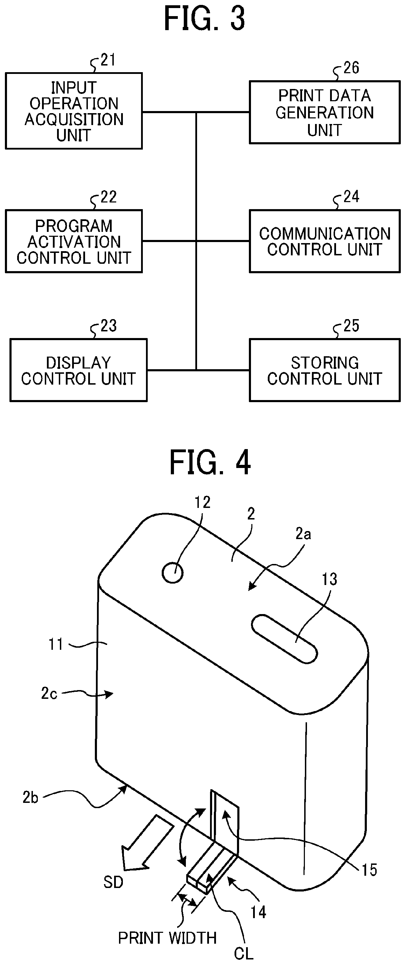

FIG. 3 is a block diagram illustrating functions implemented as the CPU 401 of the mobile communication terminal 1 operates according to the print navigation program. The CPU 401 of the mobile communication terminal 1 executes the print navigation program, thereby functioning as an input operation acquisition unit 21, a program activation control unit 22, a display control unit 23, a communication control unit 24, a storing control unit 25, and a print data generation unit 26. The CPU 401 is an example of an information processing device. The display control unit 23 is an example of an acquisition unit and a display control unit.

The input operation acquisition unit 21 acquires the information input by the user via the above-mentioned input screen. The program activation control unit 22 controls activation of the print navigation program. The display control unit 23 displays the above-mentioned input screen or the like on the display 418. The communication control unit 24 controls short-range wireless communication, such as Bluetooth (registered trademark) communication, with the handheld printer 2, via the short-range communication circuit 420. The storing control unit 25 controls reading of image data to be transmitted to the handheld printer 2, and writing and reading of the information input by the user via the input screen to a storage area such as the RAM 403.

Although the description above concerns an example in which the input operation acquisition unit 21 to the storing control unit 25 are implemented by software, alternatively, some or all of these functions can be implemented by hardware such as an integrated circuit (IC).

In another example, the print navigation program is stored in a computer-readable recording medium such as a compact disc read only memory (CD-ROM) and a flexible disk (FD), in an installable or executable file format, for distribution. In still another example, the print navigation program is stored in a computer-readable recording medium such as a compact disc-recordable (CD-R), a digital versatile disk (DVD), a Blu-ray Disc (registered trademark), and a semiconductor memory, for distribution. In still another example, the print navigation program is installed through a network such as the Internet or preloaded in a ROM, etc., of the device.

FIG. 4 is a perspective view illustrating an external configuration of the handheld printer 2. As illustrated in FIG. 4, the handheld printer 2 includes a box-shaped housing 11 that can be grasped by the user with one hand. A power button 12 and a print start button 13 are disposed on an upper face 2a of the housing 11. The power button 12 and the print start button 13 are light emitting operation buttons using, for example, a light emitting diode (LED). The CPU 401 turns on light of the power button 12 from when the power button 12 is operated until when the power button 12 is operated again (while the power is on).

The print start button 13 also serves as an answerback button when data is received from the mobile communication terminal 1. Specifically, when the CPU 401 receives the print data from the mobile communication terminal 1, the CPU 401 causes the print start button 13 to blink a predetermined number of times, for example, five times, to notify the user of the reception of the print data. Further, when the print start button 13 is operated, the CPU 401 controls printing according to the operation of the handheld printer 2.

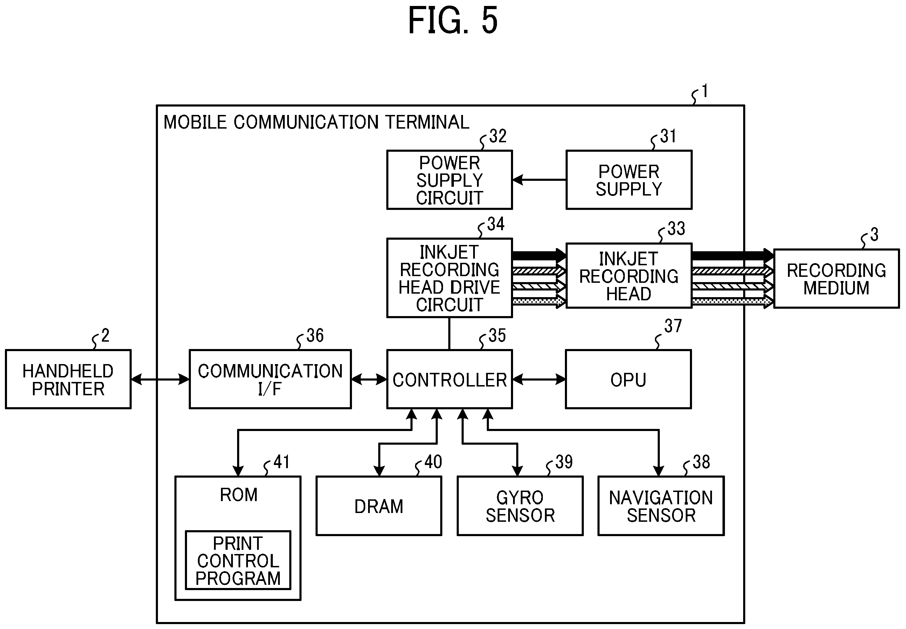

An inkjet recording head 33 (illustrated in FIG. 5) is disposed on a bottom face 2b of the handheld printer 2. The inkjet recording head 33 performs printing according to the movement of the handheld printer 2 operated by the user. Further, the operation direction of the handheld printer 2 is usually fixed in the direction indicated by arrow SD in FIG. 4, relative to the housing 11. When the housing 11 is moved in the direction indicated by arrow SD by the user, the inkjet recording head 33 performs printing.

Further, when the housing 11 is moved in a direction other than the direction indicated by arrow SD in FIG. 4, the driving of the inkjet recording head 33 is stopped, and printing is not performed. Note that printing may be permitted in all or some of the directions according to operating direction of the user (switching of the print direction).

Further, a guide 14 is disposed on a lateral side face 2c of the housing 11 facing in the print direction indicated by arrow SD in FIG. 4, so as to project in the print direction (operating direction) indicated by arrow SD. The guide 14 is shaped like a long, rectangular plate. The guide 14 is stored in a storage portion 15 along the side face 2c of the housing 11 when printing is not performed. At the time of printing, when the user hooks his or her finger nail on an upper end of the guide 14 and turns down the guide 14 in the semicircular direction indicated by an arrow, the guide 14 projects in the operation direction indicated by arrow SD from a portion of the lateral side face 2c in the vicinity of the bottom face 2b of the housing 11.

The guide unit 14 has a width PW that is a print width in which printing is performed in one operation. At a center of the guide 14 in the width direction, a center line CL extending from the lateral side face 2c toward the operation direction is provided. As one example, this center line CL is a thin red line. As described above, the width PW of the guide 14 indicates the width printed by one operation. Therefore, the center line CL indicates the center of the width PW printed by one operation. Therefore, the user aligns the center line CL with the center of the printing start position and moves the handheld printer 2. As a result, letters, images, and the like can be printed with the center positions aligned.

Hardware Configuration of Handheld Printer

FIG. 5 is a block diagram illustrating a hardware configuration of the handheld printer 2. As illustrated in FIG. 5, the handheld printer 2 includes a power supply 31, a power supply circuit 32, the inkjet (IJ) recording head 33, an inkjet recording head drive circuit 34, a controller 35, a communication I/F 36, and an operation panel unit (OPU) 37, a navigation sensor 38, a gyro sensor 39, a dynamic RAM (DRAM) 40, and a ROM 41.

The power supply 31 is a rechargeable so-called secondary battery, and generates a drive power for the handheld printer 2. The power supply circuit 32 supplies the power from the power supply 31 to necessary components. The inkjet recording head 33 discharges ink to the print medium 3 by an inkjet method, to print letters, images, or the like. The inkjet recording head drive circuit 34 controls driving of the inkjet recording head 33 in accordance with the letters or images to be printed. The controller 35 controls the entire handheld printer 2.

The communication I/F 36 is for wireless communication with the mobile communication terminal 1 by short-range wireless communication such as Bluetooth (registered trademark). The OPU 37 includes an LED for displaying the state of the handheld printer 2, a switch for the user to instruct the handheld printer 2 to form an image, and the like. However, the OPU 37 is not limited thereto, and may further include a liquid crystal display or a touch panel. The OPU 37 may further has an audio input function.

The navigation sensor 38 is configured to detect the amount of movement of the handheld printer 2 in the X-axis direction and in the Y-axis direction. For example, the X-axis direction is the operation direction SD in FIG. 4, and the Y-axis direction is a direction orthogonal to the X-axis direction. The gyro sensor 39 is configured to detect the angular velocity applied to the handheld printer 2. The DRAM 40 and ROM 41 are storage areas for, for example, image data and data indicating the print direction (print direction data). Further, the ROM 41 stores a print control program and drive waveform data of the inkjet recording head 33.

In the handheld printer 2 having the above-described configuration, in response to a reception of image data (print job) from the mobile communication terminal 1, the controller 35 calculates the position of each nozzle of the inkjet recording head 33 based on information input from the navigation sensor 38 and the gyro sensor 39. While the user operates the handheld printer 2, the controller 35 continuously calculates the position of each nozzle and acquires only the image corresponding to the calculated position from the DRAM 40. Then, the controller 35 compares the position of the acquired image with the position of each nozzle. When determining the agreement between the compared positions, the controller 35 supplies the image data for the nozzle to the inkjet recording head drive circuit 34.

The inkjet recording head drive circuit 34 supplies print timing information together with image data to the inkjet recording head 33. Based on the print timing information, the inkjet recording head 33 discharges ink corresponding to the image data onto the print medium 3. As a result, an image is recorded on the print medium 3 according to the image data designated by the user.

Configuration of Controller

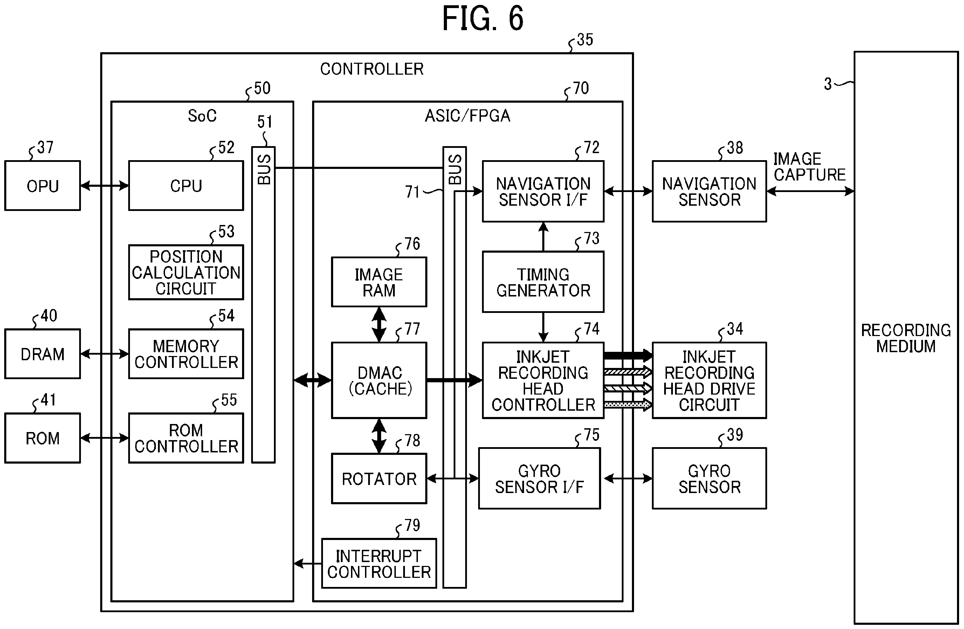

FIG. 6 is a block diagram illustrating a configuration of the controller 35 of the handheld printer 2 illustrated in FIG. 5. As illustrated in FIG. 6, the controller 35 includes a system on chip (SoC) 50 and an application-specific integrated circuit/field-programmable gate array (ASIC/FPGA) 70. The SoC 50 and the ASIC/FPGA 70 is interconnected through respective bus lines 51 and 71.

The SoC 50 includes, in addition to a CPU 52, a position calculation circuit 53 that performs position calculation, a memory controller 54 that controls writing to and reading from an external memory such as a DRAM, and a ROM controller 55 that controls writing and reading of data to and from the ROM 41.

The ASIC/FPGA 70 includes a navigation sensor I/F 72, a timing generator 73, an inkjet recording head controller 74, a gyro sensor I/F 75, an image RAM 76, a direct memory access controller (DMAC) 77, a rotator 78, and an interrupt controller 79.

The navigation sensor I/F 72 stores a movement amount ΔX in the X-axis direction and a movement amount ΔY in the Y-axis direction of the handheld printer 2 in an internal register. The gyro sensor I/F 75 stores an angular velocity co received from the gyro sensor 39 in an internal register. The timing generator 73 notifies the navigation sensor I/F 72 of the timing of reading of the information from the navigation sensor 38, and notifies the inkjet recording head controller 74 of the drive timing for printing.

The DMAC (CACHE) 77 and the rotator 78 read the image data around each nozzle of the inkjet recording head 33 from the memory 40 (or the ROM 41) based on the position information calculated by the position calculation circuit 53 of the SoC 50. Then, the DMAC (CACHE) 77 and the rotator 78 rotate the read image data according to the position and inclination of the inkjet recording head 33, and supply the read image data to the inkjet recording head controller 74.

The image RAM 76 temporarily stores the image data read from the memory 40 by the DMAC (CACHE) 77. The inkjet recording head controller 74 supplies control signals and image data to the inkjet recording head drive circuit 34. In response to completion of the communication between the navigation sensor I/F 72 and the navigation sensor 38, the interrupt controller 79 notifies the SoC 50 of the completion of the communication therebetween. The interrupt controller 79 also notifies the SoC 50 of a status such as an error.

Print Navigation

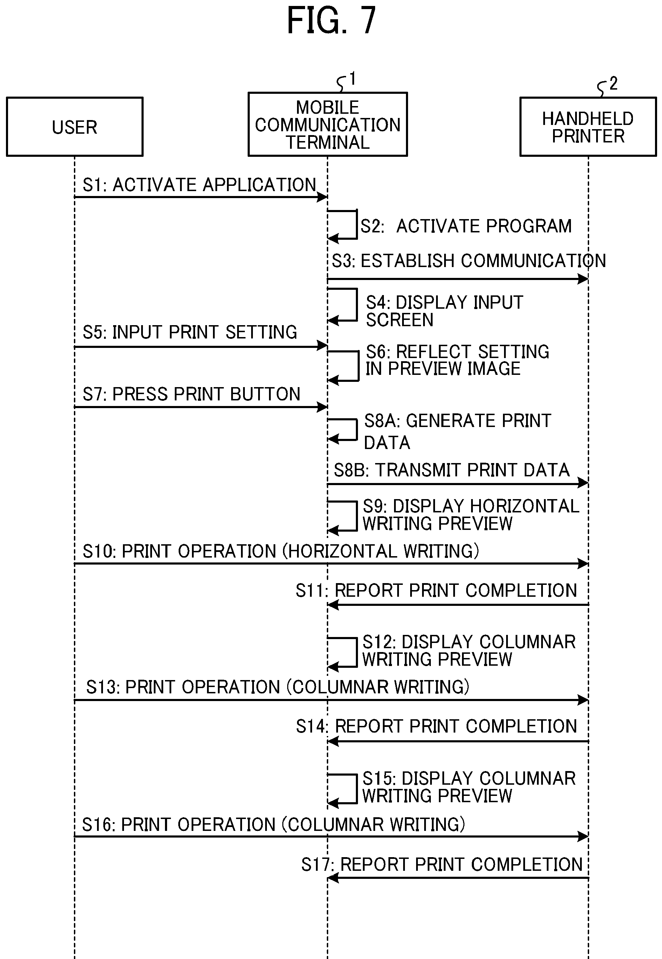

Next, a description is given of the print navigation in the printing system having the above-described configuration, according to the present embodiment. FIG. 7 is a flowchart illustrating a sequence of operation of the print navigation. In FIG. 7, in response to activation operation of the print navigation program (application) on the mobile communication terminal 1 by the user (S1), the input operation acquisition unit 21 of the mobile communication terminal 1 illustrated in FIG. 3 accepts the activation operation (an input operation) and notifies the program activation control unit 22 of the reception of the activation operation. In response to a reception of the notification of the activation operation, the program activation control unit 22 reads out the print navigation program stored in the storage area such as the EEPROM 404 illustrated in FIG. 2 and controls the activation (S2).

In response to the activation of the print navigation program, the communication control unit 24 controls the short-range communication circuit 420 to establish, for example, a Bluetooth communication line with the handheld printer 2 (S3). In addition, the display control unit 23 displays an input screen for inputting print contents on the display 418 (S4).

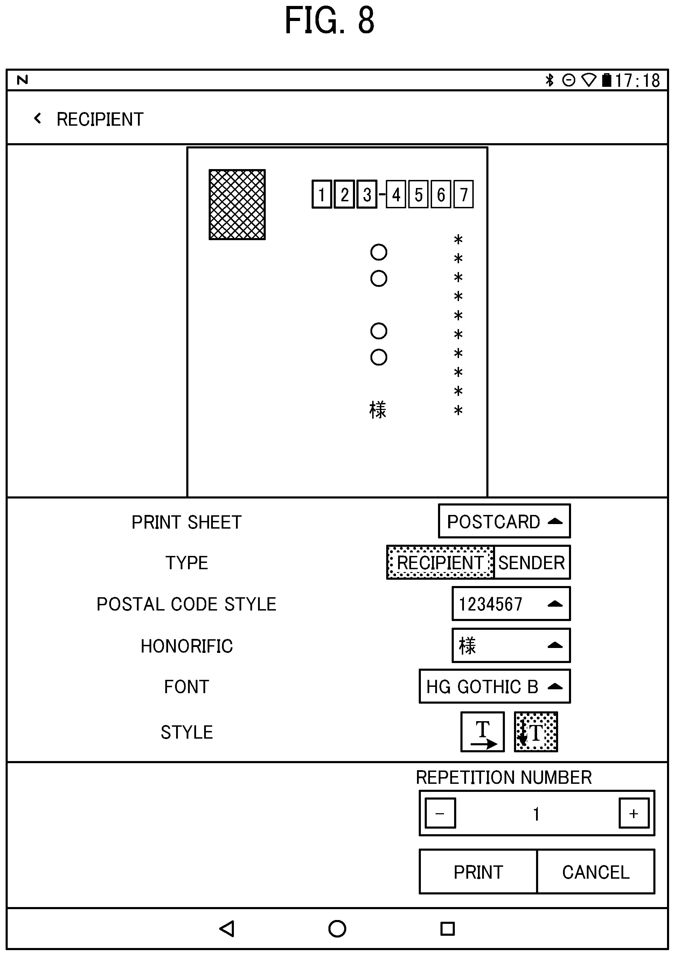

FIG. 8 is an example of the input screen. In the case of the example illustrated in FIG. 8, the display control unit 23 uses the rectangular display 418 in a portrait-oriented state and divides the entire display area, which is vertically long, into three areas of an upper area, a middle area, and a lower area. The display control unit 23 displays a preview image of a printed matter corresponding to the current setting contents in the upper area. The display control unit 23 displays various setting items in the middle area near the display area of the preview image. In addition, in the lower area, the display control unit 23 displays a repetition number (number of printed sheets) setting button, a print button (a button labelled with "PRINT" for starting printing), and a print cancel button (a button labelled with "CANCEL").

The display control unit 23 displays, in the middle area, various setting items such as print sheet setting for selecting sheet type such as postcard, envelope, or A4 size sheet used for printing and setting of whether to perform recipient printing or sender printing. The setting items displayed by the display control unit 23 in the middle area further includes setting of postal code style such as Chinese numerals or Arabic numerals, and setting of title or honorific (Japanese honorifics examples include "sama," "onchu," and "sensei"). The setting items displayed by the display control unit 23 in the middle area further includes font setting such as HG Gothic B and Mincho style, direction of letters (style) such as columnar writing or horizontal writing.

The user inputs desired values for such various setting items, that is, inputs print contents (S5). In the example illustrated in FIG. 8, the user sets "postcard" as the print sheet, "recipient" as the type, Arabic numerals as the postal code style, "sama" as Japanese honorific, "HG Gothic B" as font, and "columnar writing" as style.

As one example, the storage area (a predetermined area in the storage area) of the mobile communication terminal 1 stores an address book in which contact information, such as addresses, names, phone numbers, and email addresses, of friends, acquaintances, and relatives are recorded. The display control unit 23 reflects, in the preview image in the upper area, the address and the like of the first entry (i.e., a predetermined recipient) in the address book, or those of the entry (i.e., a predetermined recipient) selected in advance by the user of the mobile communication terminal 1, according to the set values of the various settings described above (S6).

That is, in the example illustrated in FIG. 8, the display control unit 23 displays, in the upper area, a preview image of a postcard in which the postal code of the predetermined recipient is in Arabic numerals, the address thereof is in columnar writing, and the name thereof is in columnar writing. The user of the mobile communication terminal 1 views such a preview image and recognizes that printing is to be performed in the desired form. Then, the user operates the print button illustrated in FIG. 8 (S7).

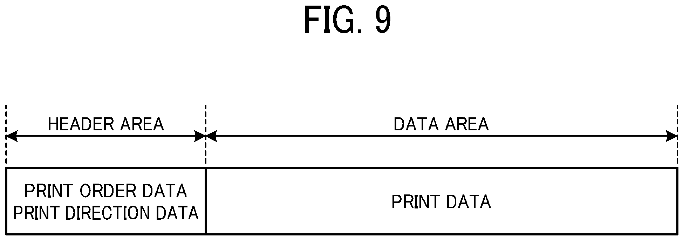

In response to the operation of the print button, the storing control unit 25 reads out text data such as an address and a name from the address book in the storage area described above. The print data generation unit 26 converts the text data into image data (i.e., print data) for printing, that is, generates print data (S8A). Further, as illustrated in FIG. 9, the print data generation unit 26 adds, to each print data, print order data indicating the order of print and print direction data indicating the direction of printing, for example, as header information (attribute information). The communication control unit 24 controls the short-range communication circuit 420 to transmit the data to the handheld printer 2 (S8B). As a result, the print order data indicating "first" and the print direction data indicating "horizontal" are added to the postal code print data, the print order data indicating "second" and the print direction data indicating "vertical" are added to the address print data, and the print order data indicating "third" and the print direction data indicating "vertical" are added to the name data. Then, the data is sent to the handheld printer 2.

That is, print direction data indicating a default print direction (e.g., horizontal direction) set for, for example, postal code, or a print direction (vertical direction or horizontal direction) set by the user, in addition to the print order data, is transmitted together with each print data.

In response to a reception of such print data, the CPU 52 of the handheld printer 2 controls the print start button 13 illustrated in FIG. 4 to blink the predetermined number of times to notify the user of the reception of the print data.

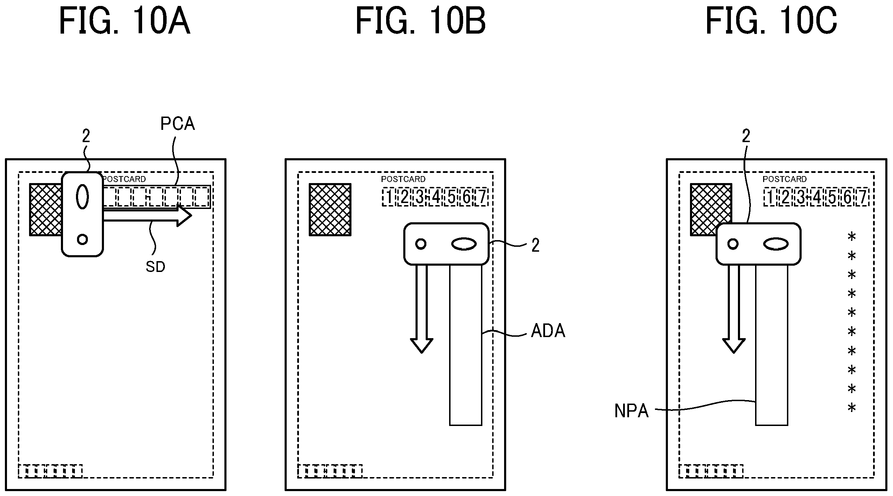

Next, the display control unit 23 displays a navigation image (horizontal writing preview) indicating the print position of the print data and the operation direction of the handheld printer 2 on the display 418 according to the print order (S9). Specifically, in this example, the print order data indicating "first" is added to the print data of the postal code. Therefore, as illustrated in FIG. 10A, the display control unit 23 displays a navigation image that instructs operating (moving) the handheld printer 2 in a postal code print area PCA (that is, to scan the postal code print area PCA) of the postcard, in order to print the postal code of the mailing destination. In FIGS. 10A, 10B, and 10C, the area surrounded by a frame is the print area. Arrow SD indicates the operating direction (or scanning direction) of the handheld printer 2. Further, for indicating the operation direction, for example, the display control unit 23 displays a lighting arrow, a blinking arrow, or an animation of an arrow that moves along the operation direction.

Such a navigation image can let the user recognize the print contents (in this case, postal code), the print position (in this case, the postal code print area PCA), and the operation direction of the handheld printer 2 (in this case, the horizontal direction). Therefore, the user operates the print start button 13 illustrated in FIG. 4 to instruct the start of printing. Specifically, the user aligns the center line CL of the guide 14 of the handheld printer 2 with the horizontal center of the postal code print area PCA, operates the print start button 13, and then moves the handheld printer 2 along the postal code print area PCA (horizontal writing print operation) in S10. As a result, the postal code corresponding to the print data is printed in the postal code print area PCA.

When the handheld printer 2 completes printing of the postal code assigned with "first" printing order in this example, the handheld printer 2 reports the completion of printing to the mobile communication terminal 1 (S11). Specifically, a print completion notification is transmitted to the mobile communication terminal 1 via the communication I/F 36 in response to a detection of the separation of the handheld printer 2 from the postcard by the gyro sensor 39.

Alternatively, the print completion notification may be sent to the mobile communication terminal 1 in response to further operation of the print start button 13 by the user, or may be sent to the mobile communication terminal 1 in response to completion of printing according to all the print data.

Next, as illustrated in FIG. 10B, the display control unit 23 of the mobile communication terminal 1 displays a navigation image (columnar writing preview) that instructs the use to move the handheld printer 2 in an address print area ADA of the postcard, that is, scan the address print area ADA with the handheld printer 2 (S12). The address is assigned with "second" print order. Since columnar writing is set for printing of the address in the input screen illustrated in FIG. 8, the arrow in the navigation image indicates the vertical direction.

Such a navigation image can let the user recognize the print contents (in this case, address), the print position (in this case, the address print area ADA in the right end area of the postcard), and the operation direction of the handheld printer 2 (in this case, the vertical direction). Therefore, the user operates the print start button 13 illustrated in FIG. 4 to instruct the start of printing. Specifically, the user aligns the center line CL of the guide 14 of the handheld printer 2 with the center of the vertical address print area ADA, operates the print start button 13, and then moves the handheld printer 2 along the print area ADA (columnar writing print operation) in S13. As a result, the address corresponding to the print data is printed in the address print area ADA.

When the handheld printer 2 completes printing of the address assigned with "second" printing order in this example, the handheld printer 2 reports the completion of printing to the mobile communication terminal 1 (S14).

Next, as illustrated in FIG. 10C, the display control unit 23 of the mobile communication terminal 1 displays a navigation image (columnar writing preview) that instructs the user to move the handheld printer 2 in a recipient name print area NPA of the postcard, that is, scan the recipient name print area NPA with the handheld printer 2 (S15). The recipient name is assigned with "third" print order. Since columnar writing is set for printing of the recipient name in the input screen illustrated in FIG. 8, the arrow in the navigation image indicates the vertical direction.

Such a navigation image can let the user recognize the print content (in this case, the recipient name), the print position (in this case, the print area NPA at the center of the postcard), and the operation direction of the handheld printer 2 (in this case, the vertical direction). Therefore, the user operates the print start button 13 illustrated in FIG. 4 to instruct the start of printing. Specifically, the user aligns the center line CL of the guide 14 of the handheld printer 2 with the horizontal center of the vertical recipient name print area NPA, operates the print start button 13, and then moves the handheld printer 2 along the recipient name print area NPA (columnar writing print operation) in S16. As a result, the recipient name corresponding to the print data is printed in the recipient name print area NPA.

When the handheld printer 2 completes printing of the recipient name assigned with "third" printing order in this example, the handheld printer 2 reports the completion of printing to the mobile communication terminal 1 (S17).

In the description of the flowchart illustrated in FIG. 7, in S8, the print data in horizontal writing and the print data in columnar writing are transmitted from the mobile communication terminal 1 to the handheld printer 2 at a time. Alternatively, data transmission may be such that the print data in horizontal writing is transmitted at a time, and then the print data in columnar writing is transmitted at a time (and vice versa). Yet alternatively, a single or a plurality of print data may be transmitted sequentially according to the print order.

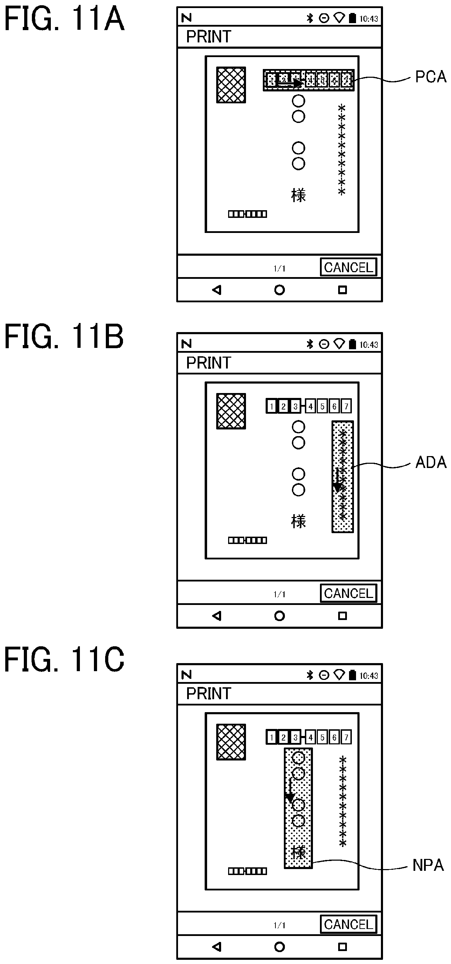

Further, when displaying the navigation image, as illustrated in FIGS. 11A to 11C, the print area may be surrounded by a predetermined color frame having a predetermined transmittance and displayed together with an arrow indicating the operation direction. Specifically, for example, the postal code print area PCA is surrounded with a blue frame, and an arrow indicating the operation direction is displayed. As a result, the print area and the operation direction of the handheld printer 2 can be displayed in a more easily understandable manner.

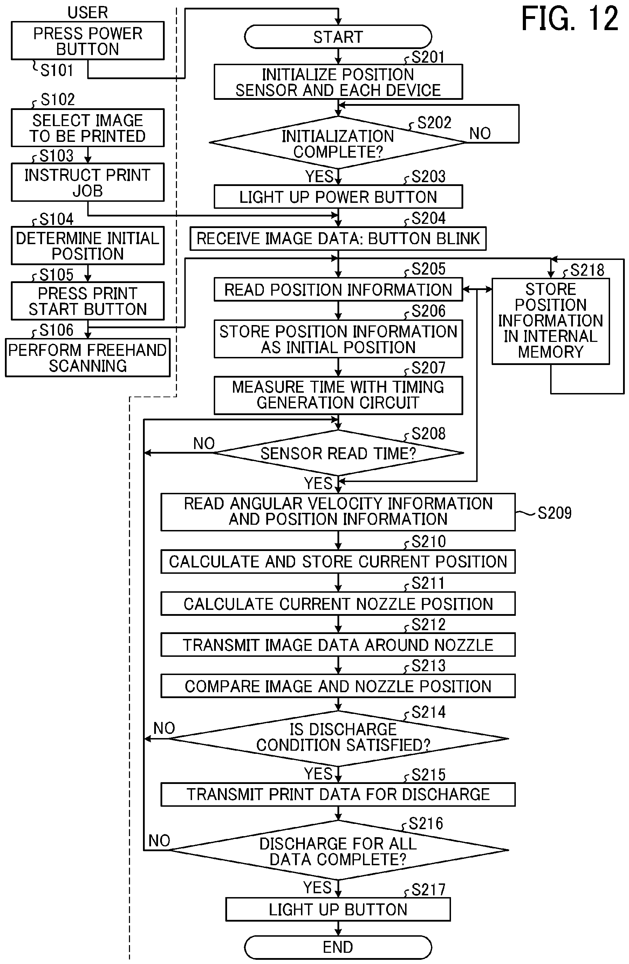

A description is given below of print operation performed by the handheld printer 2 with reference to FIG. 12. The flowchart illustrated in FIG. 12 illustrates an operation performed as the CPU 52, in particular, the controller 35 illustrated in FIG. 6 of the handheld printer 2 executes the print control program illustrated in FIG. 5.

In S101, the user presses the power button 12 of the handheld printer 2. In response to this operation, power is supplied to each part from the power supply 31 of the handheld printer 2. The SoC 50 (the CPU 52) initializes each electronic device and starts up each device (S201 and S202). After the initialization is completed, for example, the power button 12 is lit up to notify the user that the printing is feasible (S203).

The user selects an image to be printed from an image input device such as a personal computer or the mobile communication terminal 1 (S102). As the user instructs execution of a print job, the mobile communication terminal 1 transmits image data in the format of, for example, tagged image file format (TIFF) or Joint Photographic Experts Group (JPEG) based on the above-mentioned print navigation program or printer driver via wireless communication (S103). In response to a reception of the image data, the SoC 50 (the CPU 52) of the handheld printer 2 notifies the user of the reception by, for example, blinking of the print start button 13 (S204).

The user determines the initial position of the handheld printer 2 on the print medium 3 on which printing is performed (S104), and operates (e.g., presses) the print start button 13 (S105). After that, the user moves the handheld printer 2 (performs freehand scanning) on the print medium 3. As a result, the image corresponding to the image data is printed on the print medium 3 (S106).

In response to the operation of the print start button 13, the SoC 50 (CPU 52) of the handheld printer 2 instructs each sensor I/F in the ASIC/FPGA 70 to read the information necessary for the position calculation of the navigation sensor 38. The navigation sensor 38 and the gyro sensor 39 start detecting the position information necessary for position calculation and store the position information in an internal memory (S218).

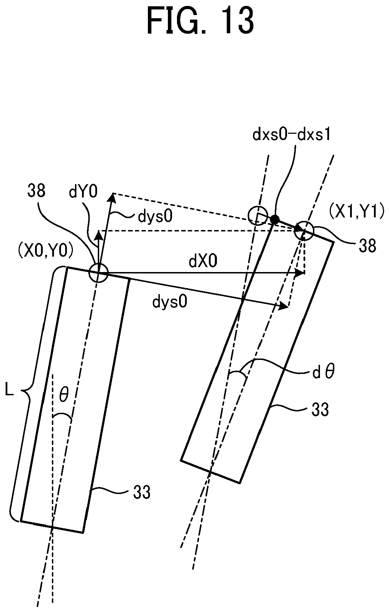

FIG. 13 is a plan view illustrating a position calculation method of the navigation sensor 38. As illustrated in FIG. 13, the obtained angular velocity co is expressed as follows.

$$\omega = \frac{d\theta}{dt} \qquad \cdots \text{Equation 1}$$

where $d\theta$ represents rotation angle for each sampling period, and dt represents a sampling time. Therefore, the rotation angle $d\theta$ for each sampling period is expressed as follows.

$$d\theta = \omega \times dt \qquad \cdots \text{Equation 2}$$

Then, a current angle $\theta$ (time t = 0 to N) is expressed as follows.

$$\theta = \sum_{t=0}^{N} \omega i \times dt \qquad \cdots \text{Equation 3}$$

The angle $d\theta$ obtained from Equation 2 and the current angle $\theta$ obtained from Equation 3 are substituted into Equations 4 to 7 to calculate the two-dimensional coordinates (X1,Y1) from the origin (X0, Y0).

$$dX_0 = dx_{s0} \times \cos\theta + dy_{s0} \times \sin\theta \qquad \cdots \text{Equation 4}$$

$$dY_0 = -dx_{s0} \times \sin\theta + dy_{s0} \times \cos\theta \qquad \cdots \text{Equation 5}$$

$$X1 = X_0 + dX_0 \qquad \cdots \text{Equation 6}$$

$$Y1 = Y_0 + dY_0 \qquad \cdots \text{Equation 7}$$

When the coordinates of the navigation sensor 38 is calculated, the coordinates of each nozzle can be calculated by a known calculation based on the positional relationship between the navigation sensor 38 and the nozzle, which are mechanical (physical), since the layout of the devices are determined in advance.

Next, the navigation sensor I/F 72 communicates with the navigation sensor 38 and reads, as position information, the movement amount $\Delta$X in the X-axis direction and the movement amount $\Delta$Y in the Y-axis direction of the handheld printer 2. Further, the gyro sensor I/F 75 communicates with the gyro sensor 39 and reads, as position information, the angular velocity co of the handheld printer 2 (S205). The navigation sensor I/F 72 and the gyro sensor I/F 75 set the position based on the read information as the initial position having, for example, the X coordinate and the Y coordinate "0,0" (S206). After that, the timing generator 73 (a timing generation circuit) inside the ASIC/FPGA 70 measures time (S207). In S208, the SoC 50 determines whether it is the read timing set for each sensor. At each read timing set for each sensor (Yes in S208), the navigation sensor I/F 72 and the gyro sensor I/F 75 repeat reading of the above-mentioned information (S209).

The value detected by the navigation sensor 38 (movement amounts in the X-axis direction and Y-axis directions) and the value detected by the gyro sensor 39 (angular velocity co) are necessary for calculating the current two-dimensional position coordinates with respect to the origin. Accordingly, preferably, such information (values) are read simultaneously.

The SoC 50 (CPU 52) reads information from the ASIC/FPGA 70, calculates the current position of the handheld printer 2 from the previously calculated position (X,Y), the movement amount ($\Delta$X, $\Delta$Y) read at that time, and the angular velocity co read at that time, and store the current position in the storage area (S210).

The SoC 50 (CPU 52) transmits the calculated current position information of the handheld printer 2 to the ASIC/FPGA 70. The ASIC/FPGA 70 calculates the position coordinates of each nozzle (current nozzle position) of the inkjet recording head 33 based on the predetermined relationship between the installation positions of the navigation sensor 38 and the inkjet recording head 33 (S211).

The DMAC (CACHE) 77 and the rotator 78 of ASIC/FPGA 70 read image data around each nozzle of the inkjet recording head 33 from the storage area based on the position information, and rotate the image data (convert the coordinates) in accordance with the designated position and tilt of the inkjet recording head 33 (S212). After that, the CPU 52 compares the image data with the coordinates of each nozzle position (S213). In response to a determination that a set discharge condition is satisfied (S214: Yes), the image data is transmitted to the inkjet recording head controller 74 (S215).

By repeatedly executing the processes from S208 to S215, the CPU 52 controls printing of the image on the print medium 3. In response to a determination that the printing of the entire image is completed (S216: Yes), the SoC 50 (the CPU 52) controls the power button 12 or the print start button 13 to blink (S217) to notify the user of the completion of printing.

Even when the printing of the entire image has not been completed, the user may determine that subsequent printing is unnecessary and operate the print start button 13. As a result, subsequent printing is cancelled. Processing in the flowchart illustrated in FIG. 12 can be divided and assigned to the SoC 50 and the ASIC/FPGA 70 according to the performance of the CPU 52, the circuit scale of the ASIC/FPGA 70, and the like.

As described above, the printing system according to the present embodiment displays the print contents such as letters, symbols, and images to be printed, the position where printing is performed, and the direction in which the handheld printer 2 is operated on the display 418 of the mobile communication terminal 1. With such a display, the user can recognize the print position and the operating direction of the handheld printer 2 in advance and accurately print letters and the like of desired print contents in a desired print area. Further, since the user only needs to operate the handheld printer 2 at the print position displayed on the display 418 and in the operation direction displayed on the display 418, the usability (operability) can be improved.

Finally, the above-described embodiments are presented as examples and are not intended to limit the scope of the present invention. The above-described embodiments can be implemented in other various forms, and various omissions, replacements, and changes can be made without departing from the scope of the invention. In addition, the embodiments and modifications or variations thereof are included in the scope and the gist of the invention, and are included in the invention described in the claims and the equivalent scopes thereof.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses can include any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium (carrier means). The carrier medium can include a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

## Claims

1. An information processing device (401) comprising:

      a communication circuit (420) configured to communicate with a printer (2);
      a print data generation unit (26) configured to generate print data including image data of a print target and operation direction information indicating an operation direction of the printer (2) on a print medium for each print target; and
      a transmission control unit (24) configured to control the communication circuit (420) to transmit the print data to the printer (2),
      wherein the printer (2) is configured to print the print target based on the image data on the print medium while being operated in a direction indicated by the operation direction on the print medium.

2. The information processing device (401) according to claim 1, further comprising a display control unit (23) configured to display, on a display (418):

a preview image indicating the operation direction of the printer (2); and
a print area on the print medium in which the printer (2) is to be operated for printing of the print target.

3. The information processing device (401) according to claim 2,
   wherein the print data generation unit (26) is configured to add, to the print data, print order information indicating a print order of each print target, and
   wherein the display control unit (23) is configured to display, on a display (418), the preview image of each print target in an order according to the print order information.

4. The information processing device (401) according to claim 2 or 3, wherein the display control unit (23) is configured to display, on a display (418):

   an input screen for inputting a print direction to be added to the print data; and
   the preview image indicating the operation direction of the printer (2) corresponding to the print direction input via the input screen.

5. The information processing device (401) according to any one of claims 1 to 4,
   wherein the transmission control unit (24) is configured to control the communication circuit (420) to transmit, to the printer (2), print data of a plurality of print targets assigned with a same operation direction of the printer (2) at a time, or print data of a plurality of print targets assigned with different operation directions of the printer (2) at a time.

6. An information processing system comprising:

   a communication terminal (1) comprising:

   the information processing device (401) according to any one of claims 1 to 5; and
   a display (418) configured to display a preview image indicating the operation direction of the printer (2) and a print area on the print medium in which the printer (2) is to be operated for printing of the print target; and

   the printer (2) configured to perform printing on the print medium according to the print data received from the communication terminal (1).

7. An information processing method comprising:

   communicating (S3) with a printer (2);
   generating (S8A) print data including image data of a print target and operation direction information indicating an operation direction of the printer (2) for each print target; and
   transmitting (S8B) the print data to the printer (2),
   wherein the printer (2) is configured to print the print target based on the image data on the print medium while being operated in a direction indicated by the operation direction on the print medium.

8. The information processing method according to claim 7, further comprising displaying (S9) a preview image indicating the operation direction of the printer (2) and a print area on the print medium in which the printer (2) is to be operated for printing of the print target.

9. The information processing method according to claim 8,
   wherein the generating (S8A) includes adding, to the print data, print order information indicating a print order of each print target, and
   wherein the displaying (S9) includes displaying the preview image of each print target in the print order according to the print order information.

10. The information processing method according to claim 8 or 9,
    wherein the displaying (S9) includes displaying:

    an input screen for inputting a print direction to be added to the print data; and
    the preview image indicating the operation direction of the printer (2) corresponding to the print direction input via the input screen.

11. The information processing method according to any one of claims 7 to 10, wherein the transmitting (S8B) includes transmitting, to the printer (2), print data of a plurality of print targets assigned with a same operation direction of the printer (2) at a time, or print data of a plurality of print targets assigned with different operation directions of the printer (2) at a time.

12. Carrier means carrying computer readable code for controlling a computer to carry out the method according to any one of claims 7 to 11.

# FIG. 1

# FIG. 2

EP 3 825 836 A1

412a

413 CMOS SENSOR

415 MICROPHONE   416 SPEAKER

420a

412 COMMUNICATION CIRCUIT

414 IMAGE SENSOR I/F

417 AUDIO INPUT/ OUTPUT I/F

418 DISPLAY

419 EXTERNAL DEVICE I/F

420 SHORT-RANGE COMMUNICATION CIRCUIT

421 TOUCH PANEL

410

401 CPU   402 ROM   403 RAM

404 EEPROM

PRINT NAVIGATION PROGRAM

406 IMAGE SENSOR I/F

405 CMOS SENSOR

407 ACCELERATION AND ORIENTATION SENSOR

409 MEDIA I/F

411 GPS RECEIVER

RECORDING MEDIUM

408

1

# FIG. 3

| | |
|---|---|
| 21 INPUT OPERATION ACQUISITION UNIT | 26 PRINT DATA GENERATION UNIT |
| 22 PROGRAM ACTIVATION CONTROL UNIT | 24 COMMUNICATION CONTROL UNIT |
| 23 DISPLAY CONTROL UNIT | 25 STORING CONTROL UNIT |

# FIG. 4

PRINT WIDTH

# FIG. 5

MOBILE COMMUNICATION TERMINAL ⟋1

POWER SUPPLY CIRCUIT ⟋32

POWER SUPPLY ⟋31

INKJET RECORDING HEAD DRIVE CIRCUIT ⟋34

INKJET RECORDING HEAD ⟋33

RECORDING MEDIUM ⟋3

HANDHELD PRINTER ⟋2

COMMUNICATION I/F ⟋36

CONTROLLER ⟋35

OPU ⟋37

ROM ⟋41

PRINT CONTROL PROGRAM

DRAM ⟋40

GYRO SENSOR ⟋39

NAVIGATION SENSOR ⟋38

EP 3 825 836 A1

16

## FIG. 6

# FIG. 7

# FIG. 8

| | |
|---|---|
| PRINT SHEET | POSTCARD ▲ |
| TYPE | RECIPIENT SENDER |
| POSTAL CODE STYLE | 1234567 ▲ |
| HONORIFIC | 様 ▲ |
| FONT | HG GOTHIC B ▲ |
| STYLE | |

REPETITION NUMBER

| − | 1 | + |

| PRINT | CANCEL |

# FIG. 9

| HEADER AREA | DATA AREA |
|---|---|
| PRINT ORDER DATA<br>PRINT DIRECTION DATA | PRINT DATA |

# FIG. 10A  FIG. 10B  FIG. 10C

EP 3 825 836 A1

FIG. 11A

PRINT

PCA

1/1 CANCEL

FIG. 11B

PRINT

ADA

1/1 CANCEL

FIG. 11C

PRINT

NPA

1/1 CANCEL

FIG. 12

USER
PRESS POWER
BUTTON
⌐S101

START

INITIALIZE POSITION
SENSOR AND EACH DEVICE ⌐S201

⌐S102
SELECT IMAGE
TO BE PRINTED

INITIALIZATION
COMPLETE? ⌐S202    NO

⌐S103
INSTRUCT PRINT
JOB

YES↓    ⌐S203
LIGHT UP POWER BUTTON

⌐S104
DETERMINE INITIAL
POSITION

⌐S204
RECEIVE IMAGE DATA: BUTTON BLINK

⌐S105
PRESS PRINT
START BUTTON

READ POSITION INFORMATION ⌐S205

⌐S218
STORE
POSITION
INFORMATION
IN INTERNAL
MEMORY

⌐S106
PERFORM FREEHAND
SCANNING

STORE POSITION INFORMATION
AS INITIAL POSITION ⌐S206

MEASURE TIME WITH TIMING
GENERATION CIRCUIT ⌐S207

NO    SENSOR READ TIME? ⌐S208

YES↓

READ ANGULAR VELOCITY INFORMATION
AND POSITION INFORMATION ∼S209

CALCULATE AND STORE CURRENT POSITION ⌐S210

CALCULATE CURRENT NOZZLE POSITION ⌐S211

TRANSMIT IMAGE DATA AROUND NOZZLE ⌐S212

COMPARE IMAGE AND NOZZLE POSITION ⌐S213

NO    IS DISCHARGE
CONDITION SATISFIED? ⌐S214

YES↓    ⌐S215
TRANSMIT PRINT DATA FOR DISCHARGE

NO    DISCHARGE FOR ALL
DATA COMPLETE? ⌐S216

YES↓    ⌐S217
LIGHT UP BUTTON

END

23

# FIG. 13

Europäisches
Patentamt

European
Patent Office

Office européen
des brevets

## EUROPEAN SEARCH REPORT

Application Number

EP 20 20 6686

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 415 328 A1 (RICOH CO LTD [JP]) 19 December 2018 (2018-12-19) * paragraph [0011] - paragraph [0021] * * paragraph [0055] - paragraph [0061] * * paragraph [0085] - paragraph [0194] * * figures 1, 5, 6, 17, 19, 20, 21A-21C, 22D, 24, 27C * ----- | 1-12 | INV. G06F3/12 B41J3/36 |

TECHNICAL FIELDS
SEARCHED     (IPC)

G06F
B41J

The present search report has been drawn up for all claims

| Place of search | Date of completion of the search | Examiner |
|---|---|---|
| The Hague | 7 April 2021 | Kochev, Miroslav |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

......................................................................................
& : member of the same patent family, corresponding
   document

EPO FORM 1503 03.82 (P04C01)

**EP 3 825 836 A1**

## ANNEX TO THE EUROPEAN SEARCH REPORT
## ON EUROPEAN PATENT APPLICATION NO.

EP 20 20 6686

This annex lists the patent family members relating to the patent documents cited in the above-mentioned European search report.
The members are as contained in the European Patent Office EDP file on
The European Patent Office is in no way liable for these particulars which are merely given for the purpose of information.

07-04-2021

| Patent document cited in search report | | Publication date | Patent family member(s) | | Publication date |
|---|---|---|---|---|---|
| EP 3415328 | A1 | 19-12-2018 | EP | 3415328 A1 | 19-12-2018 |
| | | | JP | 2019003336 A | 10-01-2019 |
| | | | US | 2018354257 A1 | 13-12-2018 |

EPO FORM P0459

For more details about this annex : see Official Journal of the European Patent Office, No. 12/82

26

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010520087 A